# EUROPÄISCHE PATENTANMELDUNG

(11) **EP 1 248 134 A2**
(43) Veröffentlichungstag der Anmeldung: **09.10.2002**
(21) Anmeldenummer: 02100250.6
(22) Anmeldetag: 14.03.2002
(51) Int. Cl.: G02B 21/00, G02B 21/02

(54) **Inspektionsmikroskop und Objektiv für ein Inspektionsmikroskop**

(30) Priorität: 06.04.2001 DE 10117167
(71) Anmelder: Leica Microsystems Semiconductor GmbH, 35578 Wetzlar (DE)
(72) Erfinder: HOPPEN, Gerhard, 35578 Wetzlar (DE)
(74) Vertreter: Reichert, Werner F., Dr.

(57) **Zusammenfassung**

Ein Inspektionsmikroskop (1) mit einer Lichtquelle (3), die Licht einer ersten Wellenlänge unterhalb von 400 nm zur Beleuchtung eines zu inspizierenden Objekts (13) emittiert und mit einem Objektiv (11), das aus mehreren optischen Komponenten zusammengesetzt ist und eine Numerische Apertur sowie eine Vergrößerung aufweist und mit einer Tubusoptik (21) und einer Autofokuseinrichtung (25), die Licht einer zweiten Wellenlänge auf das Objekt (13) richtet ist offenbart. Das Inspektionsmikroskop (1) ist gekennzeichnet durch das Objektiv (11), das eine optische Korrektur aufweist, die den Farblängsfehler in Bezug auf die erste und die zweite Wellenlänge eliminiert und dessen optische Komponenten kittfrei zusammengefügt sind, wobei die zweite Wellenlänge größer als 400 nm ist.

## Beschreibung

Die Erfindung betrifft ein Inspektionsmikroskop gemäß dem Oberbegriff des Patentanspruchs 1.

Ferner betrifft die Erfindung ein Objektiv mit den Merkmalen des Oberbegriffs des Patentanspruchs 7.

In der Halbleiterindustrie werden Inspektionsmikroskope zur Untersuchung und Prüfung von Wafern, Masken und Halbleiterbausteinen während der verschiedenen Entstehungsphasen eingesetzt. Inspektionsmikroskope sind meist weitgehend automatisiert. Hierzu gehören unter anderem automatische Transport- und Handhabungssysteme für die zu untersuchenden Bausteine oder Wafer, sowie die Möglichkeit der automatischen Fokussierung.

Inspektionsmikroskope sind beispielsweise in den deutschen Patentschriften DE 39 17 260 "Waferinspektionseinrichtung" und DE 197 42 802 C1 "Mikroskopstativ für ein Waferinspektionsmikroskop" beschrieben.

Das optische Auflösungsvermögen eines Mikroskops hängt von der Wellenlänge des Beleuchtungslichtes und der Numerischen Apertur des Objektivs ab. Je kleiner die aufzulösende Struktur ist, umso kürzer muss die Wellenlänge des Beleuchtungslichtes gewählt werden; da sich die Numerische Apertur der Objektive nicht beliebig steigern lässt. Bei Trockenobjektiven sind höchstens Numerische Aperturen von 0,9 bis 0,95 erreichbar. Die Größe der Strukturen von Wafern für hochintegrierte Schaltkreise erfordert die Verwendung ultravioletten Lichts. Derzeit sind Beleuchtungswellenlängen zwischen 248 nm und 365 nm üblich.

Standard-Objektive werden im sichtbaren Bereich des Lichtspektrums , also im Spektralbereich von 400 nm bis 800 nm, betrieben. Für Anwendungen mit ultraviolettem Licht sind Standard-Objektive ungeeignet; denn der Transmissionsgrad der Standard-Objektive nimmt dramatisch ab, je weiter die gewählte Wellenlänge im Ultravioletten liegt.

Ein Objektiv, das sowohl im sichtbaren, als auch im ultravioletten Bereich achromatisch ist, ist in der japanischen Patentschrift mit der Publikationsnummer JP2000105340 A offenbart. Dieses Objektiv besteht aus mindestens drei Glassorten, die Bariumfluorid enthalten, wobei die Linsen zu mehreren Gruppen zusammengefügt sind, von denen die erste, die zweite und die vierte positive Brechkraft aufweisen, während die dritte Gruppe negative Brechkraft hat.

Durch die Bestrahlung mit extrem kurzwelligem ultravioletten Licht kommt es zu Schäden sowohl an Standard-Objektiven, als auch an Spezialobjektiven, die eigentlich sogar für den ultravioletten Bereich hergestellt wurden. Bei Standard-Objektiven sind diese Schäden unter anderem auf fototrope Effekte in den Gläsern zurückzuführen, die durch chemischen Umbau der Glasstruktur eine Verringerung des Transmissionsgrads bewirken. Schäden dieser Art sind oft reversibel. Speziell für den ultravioletten Bereich ausgelegte Objektive sind meist aus Quarzglas oder Kalziumfluorid gefertigt. Gläser aus diesen Materialien weisen im ultravioletten Bereich einen hohen Transmissionsgrad auf und werden durch ultraviolettes Licht nicht verändert. Dennoch kommt es auch bei diesen Spezialobjektiven, wie auch bei Standard-Objektiven, zu irreversiblen Zerstörungen, die sich durch allmähliche Eintrübung, Abnahme des Transmissionsgrades und Verschlechterung der Auflösung bemerkbar machen. Diese Schwierigkeiten sind bislang nicht vollständig verstanden.

Eine zusätzliche Schwierigkeit tritt auf, wenn ein Inspektionsmikroskop mit einem Autofokussystem ausgerüstet ist. Hierbei wird ein Autofokuslichtstrahl in den Strahlengang des Inspektionsmikroskops eingekoppelt und vom Objektiv fokussiert. Die Scharfeinstellung erfolgt dann beispielsweise durch Ermittlung des Kontrastes der Abbildung des von dem zu untersuchenden Bauteil reflektierten Lichtes mit Hilfe einer Vierquadranten-Photodiode. Da das Inspektionsmikroskop sowohl bei sichtbarem Licht, als auch bei ultraviolettem Licht einsetzbar sein muss, darf die Wellenlänge des Autofokuslichtes nicht innerhalb dieser Bereiche des Spektrums liegen; um eine Beeinflussung des Messvorganges durch Licht des Autofokussystems zu vermeiden. Da die Empfindlichkeit von Halbleiterdetektoren im roten bis infraroten Bereich des Spektrums am höchsten ist, ist es vorteilhaft, eine Autofokuswellenlänge in diesem Bereich zu wählen. Die optischen Eigenschaften von Objektiven sind im Allgemeinen für Licht unterschiedlicher Wellenlängen verschieden, was die Auswertung der dadurch fehlerbehafteten Signale des Autofokussystems erschwert.

Es ist daher Aufgabe der vorliegenden Erfindung, ein Inspektionsmikroskop mit einer Autofokuseinrichtung anzugeben, das die aufgezeigten Probleme löst

Obige Aufgabe wird durch eine Inspektionsvorrichtung, die die Merkmale des kennzeichnenden Teils des Anspruchs 1 beinhaltet, gelöst.

Es ist außerdem Aufgabe der vorliegenden Erfindung, ein Objektiv zu schaffen, das langzeitstabile optische Eigenschaften aufweist.

Vorstehende Aufgabe wird durch die Merkmale des kennzeichnenden Teils des Anspruchs 7 gelöst.

Die Erfindung hat den Vorteil, dass das erfindungsgemäße Inspektionsmikroskop bzw. das erfindungsgemäße Objektiv die Untersuchung eines zu inspizierenden Objekts mit ultraviolettem und tiefultraviolettem Licht erlaubt, ohne dass hierdurch Schäden am Inspektionsmikroskop bzw. an den optischen Komponenten des Inspektionsmikroskops auftreten. Darüber hinaus ist eine universelle Autofokuseinrichtung einsetzbar, deren Licht auch bei Verwendung von Standard-Objektiven transmittiert wird.

Es wurde erkannt, dass die selbst bei Spezialobjektiven auftretenden, irreversiblen Schäden durch chemische Veränderungen des optischen Kitts zwischen den einzelnen Linsen bei Bestrahlung mit ultraviolettem Licht und insbesondere bei Bestrahlung mit tief ultraviolettem Licht hervorgerufen werden. Bislang weisen die aus dem Stand der Technik bekannten Objektive, die für mehr als eine Wellenlänge korrigiert sind, miteinander verkittete Linsen bzw. verkittete Linsengruppen auf. Die vorliegende Erfindung löst diese Schwierigkeit vollständig und ist darüber hinaus derart ausgebildet, dass bei kollimiertem Eintritt die Schnittweite des verwendeten Objektivs für das Autofokuslicht und für das Beleuchtungslicht zumindest weitgehend identisch ist, damit die Autofokuseinrichtung zuverlässig funktioniert.

In einer bevorzugten Ausgestaltung sind die optischen Komponenten Linsen, die für die erste und für die zweite Wellenlänge weitgehend transparent sind. Sie sind vorzugsweise aus Kalziumfluorid oder aus Quarzglas oder aus Bariumfluorid oder aus Lithiumfluorid oder aus Strontiumfluorid gefertigt. In einer besonders bevorzugten Ausgestaltung sind benachbarte Linsen je aus Kalziumfluorid und Quarzglas hergestellt.

In einer konkreten Ausgestaltung beträt die erste Wellenlänge 248 nm und die zweite Wellenlänge 903 nm. Insbesondere für hochauflösende Anwendungen sind Objektive mit einer Numerischen Apertur, die höher als 0,8 ist, und mit einer hohen Vergrößerung besonders zweckmäßig. Dies bedeutet, dass die Brennweite des Objektivs vorzugsweise kleiner als 3,5 mm bei einem Arbeitsabstand über 0,15 mm ist.

Bei der Inspektion von Masken mit Pelliclen, bei denen es auf große freie Arbeitsabstände ankommt sind Objektive ganz besonders zweckmäßig, die bei einem freien Arbeitsabstand von mindestens 7 mm eine Numerische Apertur von mindestens 0,5 bis 0,55 aufweisen.

Von ganz besonderem Vorteil insbesondere hinsichtlich der Baugröße des Objektivs ist es, nicht alle Aberrationen ausschließlich im Objektiv zu korrigieren, sondern durch das Zusammenwirken von Objektiv und Tubusoptik eine Gesamtkorrektur zu erreichen. Lediglich der Farblängsfehler in Bezug auf die erste und zweite Wellenlänge müssen im Objektiv korrigiert sein, da der Strahlengang des Lichtes der Autofokuseinrichtung nicht durch die Tubusoptik verläuft. Die Korrektur für Licht der zweiten Wellenlänge ist im Besonderen sogar auf die Bildmitte beschränkt.

Vorzugsweise beinhaltet die Tubusoptik ebenfalls keinen optischen Kitt und ist derart ausgestaltet, dass durch das Zusammenwirken der Tubusoptik und des Objektivs der Farblängsfehler des Objektivs im Bereich von weniger als 10 nm oberhalb und unterhalb der ersten Wellenlänge kompensiert ist. Darüber hinaus ist es von besonderem Vorteil, die Tubusoptik derart auszubilden, dass durch das Zusammenwirken der Tubusoptik und des Objektivs der Farbquerfehler der Tubusoptik im Bereich von weniger als 10 nm oberhalb und unterhalb der ersten Wellenlänge kompensiert ist.

In der Zeichnung ist der Erfindungsgegenstand schematisch dargestellt und wird anhand der Figuren nachfolgend beschrieben. Dabei zeigen:
Fig. 1: eine Ausführungsform des Inspektionsmikroskops,
Fig. 2:den inneren Aufbau einer Ausführungsform des erfindungsgemäßen Objektivs,
Fig. 3:eine grafische Darstellung der relativen Schnittweite des Objektivs in Abhängigkeit von der Wellenlänge,
Fig. 4: den inneren Aufbau einer weiteren Ausführungsform des erfindungsgemäßen Objektivs,
Fig. 5:den inneren Aufbau einer weiteren Ausführungsform des erfindungsgemäßen Objektivs,
Fig. 6: den inneren Aufbau einer weiteren Ausführungsform des erfindungsgemäßen Objektivs,
Fig. 7: den inneren Aufbau einer weiteren Ausführungsform des erfindungsgemäßen Objektivs,
Fig. 8:den inneren Aufbau einer weiteren Ausführungsform des erfindungsgemäßen Objektivs und
Fig. 9 den inneren Aufbau einer Tubusoptik.

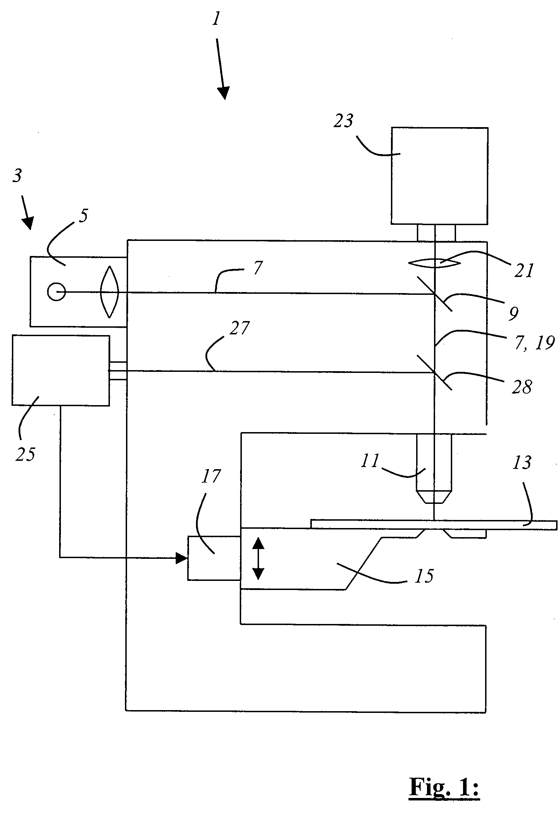

Fig. 1 zeigt eine Ausführungsform des erfindungsgemäßen Inspektionsmikroskops 1. Als Lichtquelle 3 dient eine Quecksilberlampe 5, die einen Beleuchtungslichtstrahl 7 einer ersten Wellenlänge im Bereich von 243 bis 266 nm emittiert. Der Beleuchtungslichtstrahl 7 wird mit Hilfe eines teildurchlässigen Spiegel 9 zum Objektiv 11 gelenkt und dort auf ein zu inspizierendes Objekt 13 fokussiert. Das Objekt 13 befindet sich auf einem x-y-Feinpositioniertisch 15, der zur Fokussierung entlang der Beleuchtungslichtachse verfahrbar und von einem Elektromotor 17 angetrieben ist. Das vom Objekt ausgehende Detektionslicht 19 gelangt über das Objektiv 11 und durch den teildurchlässigen Spiegel 9 hindurch zur Tubusoptik 21, die aus mehreren Linsen kittfrei zusammengefügt ist und trifft schließlich auf eine TV-Kamera 23, deren Bild auf einem nicht gezeigten Monitor dem Benutzer angezeigt wird. Das Inspektionsmikroskop weist eine Autofokuseinrichtung 25 auf, die mit Hilfe eines nicht dargestellten Lasers einen Autofokuslichtstrahl 27 einer zweiten Wellenlänge von 903 nm erzeugt, der mit einem dichroitischen Strahlteiler 28 in den Beleuchtungsstrahlengang eingekoppelt und von dem Objektiv 11 fokussiert wird. Das von dem Objekt reflektierte Autofokuslicht gelangt durch das Objektiv 11 hindurch und über den dichroitischen Strahlteiler 28 zurück zur Autofokuseinrichtung und wird dort auf eine nicht gezeigte Vierquadrantenphotodiode gelenkt, deren elektrische Signale zur Beurteilung der Position des Objektes 13 relativ zur Fokalebene des Objektivs 11 elektronisch ausgewertet werden. Die Autofokuseinrichtung 25 steuert den Elektromotor 17 des Feinpositioniertischs 13 derart, dass die Oberfläche des zu inspizierenden Objekts 13 in der Fokalebene des Objektivs 11 liegt. Das Objektiv 11 beinhaltet ausschließlich kittfrei zusammengefügte Linsen und weist bezüglich der ersten und der zweiten Wellenlänge bei kollimiertem Lichteintritt dieselbe Schnittweite auf. Es hat eine 150-fache Vergrößerung bei einer Numerischen Apertur von 0,9. Der Farblängsfehler des Objektivs 11 im Bereich von 238 nm bis 258 nm ist durch einen entgegengesetzten Farblängsfehler in der Tubusoptik 21 kompensiert; ebenso der Farbquerfehler.

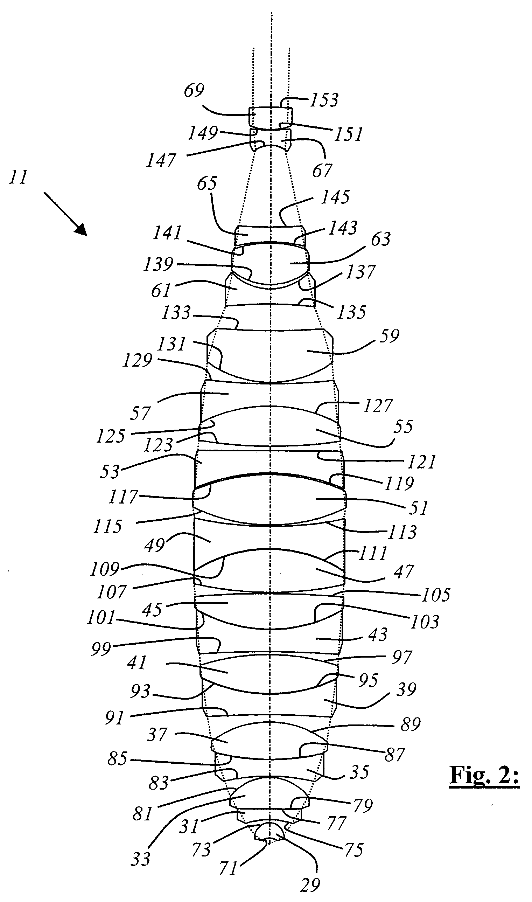

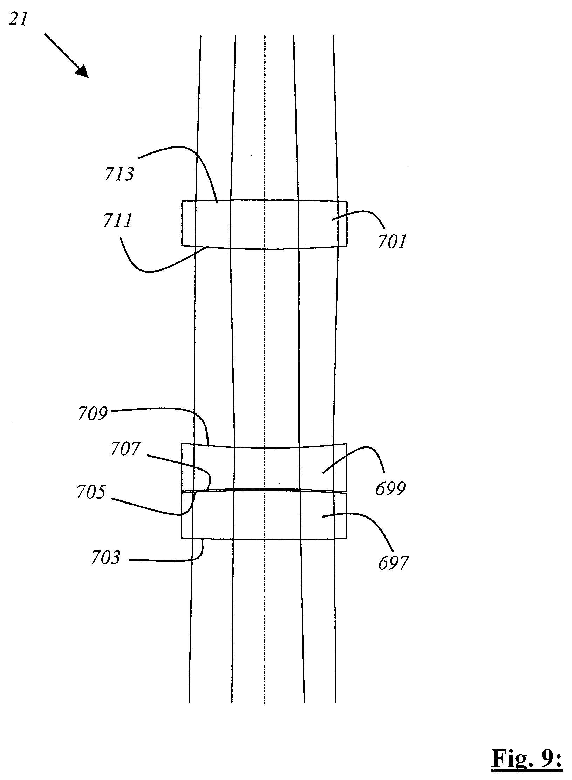

Fig. 2 zeigt den inneren Aufbau einer Ausführungsform des Objektivs 11, das 21 Linsen, die mit den Bezugszeichen 29 bis 69 markiert sind, beinhaltet. Das Objektiv 11 hat in Verbindung mit der in Figur 9 gezeigten Tubusoptik von 200 mm Brennweite eine einhundertfünfzigfache Vergrößerung und eine Numerische Apertur von 0,9. Die Linsen 29 ― 69 weisen je zwei Grenzflächen 71 ― 153 auf und sind jeweils aus Quarzglas oder aus Kalziumfluorid hergestellt. Zwischen den Linsen 29 ― 69 befinden sich Luftspalte. Das Objektiv hat bei kollimiertem Strahleintritt für Licht von 248 nm und 903 nm Wellenlänge dieselbe Schnittweite von 0,418 mm. Die Krümmungsradien der Grenzflächen 71 ― 153 der Linsen 29 ― 69, sowie die Glassorte der einzelnen Linsen und deren Abstand zueinander sind der folgenden Tabelle entnehmbar:

| Linse | Grenzfläche | Radius/mm | Abstand/mm | Glasname |
|---|---|---|---|---|
| 29 | 71 | -1.0070 | 1.0200 | QUARZGLAS |
| 29 | 73 | -1.0070 | .2000 | |
| 31 | 75 | -5.1142 | .7000 | QUARZGLAS |
| 31 | 77 | 116.3432 | .0200 | |
| 33 | 79 | 116.3432 | 2.1000 | CAF2 |
| 33 | 81 | -3.3054 | .1000 | |
| 35 | 83 | 13.0257 | 1.1000 | QUARZGLAS |
| 35 | 85 | 15.2835 | .0200 | |
| 37 | 87 | 15.2835 | 2.5000 | CAF2 |
| 37 | 89 | -6.3932 | .5000 | |
| 39 | 91 | -63.2383 | 1.4000 | QUARZGLAS |
| 39 | 93 | 10.4603 | .0200 | |
| 41 | 95 | 10.4603 | 2.6000 | CAF2 |
| 41 | 97 | -15.0571 | .2000 | |
| 43 | 99 | -71.0504 | 1.5000 | QUARZGLAS |
| 43 | 101 | 9.8492 | .0200 | |
| 45 | 103 | 9.8492 | 2.4000 | CAF2 |
| 45 | 105 | -58.9093 | .1000 | |
| 47 | 107 | 23.1720 | 2.9000 | CAF2 |
| 47 | 109 | -9.2663 | .0200 | |
| 49 | 111 | -9.2663 | 1.5000 | QUARZGLAS |
| 49 | 113 | 23.9793 | .1000 | |
| 51 | 115 | 11.6587 | 3.4000 | CAF2 |
| 51 | 117 | -12.6456 | .1000 | |
| 53 | 119 | -12.6456 | 1.5000 | QUARZGLAS |
| 53 | 121 | 2610,3417 | .3000 | |
| 55 | 123 | 30.6023 | 2.7000 | CAF2 |
| 55 | 125 | -9.9195 | .0200 | |
| 57 | 127 | -9.9195 | 1.5000 | QUARZGLAS |
| 57 | 129 | 34.6720 | .1000 | |
| 59 | 131 | 7.0048 | 3.5000 | CAF2 |
| 59 | 133 | 41.7404 | 1.8000 | |
| 61 | 135 | -27.4055 | 1.0000 | QUARZGLAS |
| 61 | 137 | 3.5732 | .3000 | |
| 63 | 139 | 4.0071 | 2.8000 | CAF2 |
| 63 | 141 | -7.1920 | .0500 | |
| 65 | 143 | -9.8514 | 1.0000 | QUARZGLAS |
| 65 | 145 | 30.3842 | 5.5000 | |
| 67 | 147 | -1.7127 | 1.0000 | CAF2 |
| 67 | 149 | 10.6695 | .0500 | |
| 69 | 151 | 4.0356 | 1.5000 | QUARZGLAS |
| 69 | 153 | -18.3130 | Unendl. | |

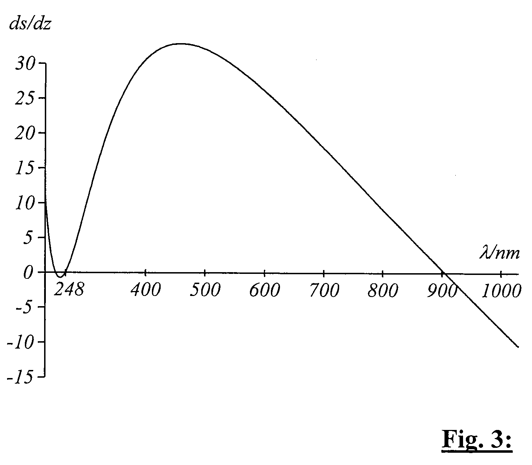

Fig. 3 zeigt in einer grafischen Darstellung die relative Schnittweite des Objektivs 11 in Abhängigkeit von der Wellenlänge ? . Es ist zu erkennen, dass im Bereich von wenigen Nanometern um 248 nm herum ein geringer Farblängsfehler existiert. Dieser Farblängsfehler ist in einem Inspektionsmikroskop vorzugsweise mit Hilfe einer speziell ausgelegten Tubusoptik kompensiert, damit auch breitbandige Lichtquellen aberrationsfrei eingesetzt werden können.

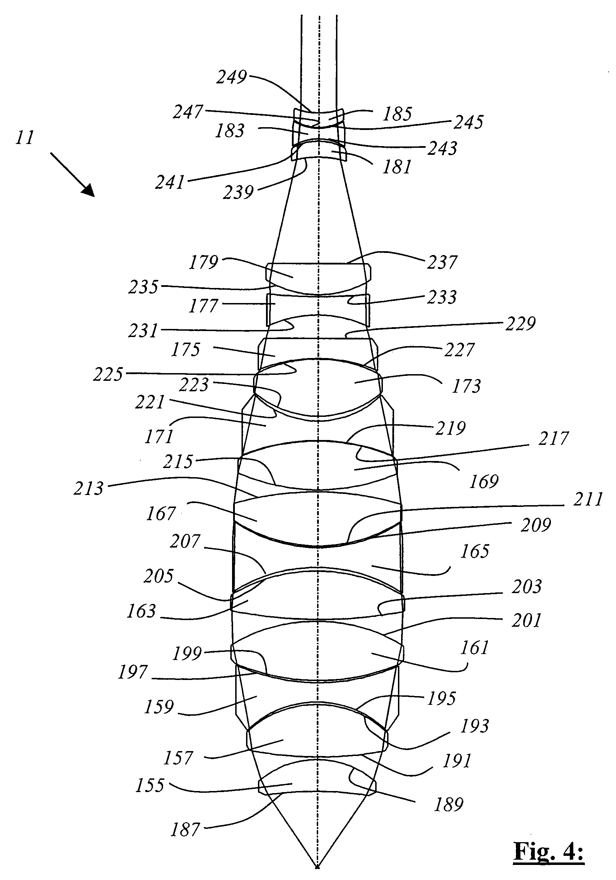

Fig. 4 zeigt den inneren Aufbau einer weiteren Ausführungsform des Objektivs 11, das 16 Linsen, die mit den Bezugszeichen 155 bis 185 markiert sind, beinhaltet. Das Objektiv 11 hat in Verbindung mit der in Figur 9 gezeigten Tubusoptik von 200 mm Brennweite eine dreiundsechzigfache Vergrößerung und eine Numerische Apertur von 0,55. Die Linsen 155 ― 185 weisen je zwei Grenzflächen 187 ― 249 auf und sind jeweils aus Quarzglas oder aus Kalziumfluorid hergestellt. Zwischen den Linsen 155― 185 befinden sich Luftspalte. Das Objektiv hat bei kollimiertem Strahleintritt für Licht von 248 nm und 903 nm Wellenlänge dieselbe Schnittweite von 7,7 mm. Der Arbeitsabstand beträgt 7,0 mm. Die Krümmungsradien der Grenzflächen 187―249 der Linsen 155―185, sowie die Glassorte der einzelnen Linsen und deren Abstand zueinander sind der folgenden Tabelle entnehmbar:

| Linse | Grenzfläche | Radius/mm | Abstand/mm | Glasname |
|---|---|---|---|---|
| 155 | 187 | -31.8610 | 3.2000 | QUARZGLAS |
| 155 | 189 | -8.9120 | .3000 | |
| 157 | 191 | 36.5170 | 5.3400 | CAF2 |
| 157 | 193 | -10.2030 | .2400 | |
| 159 | 195 | -9.9220 | 2.0000 | QUARZGLAS |
| 159 | 197 | 20.1110 | .2200 | |
| 161 | 199 | 21.2920 | 6.0200 | CAF2 |
| 161 | 201 | -16.4330 | .2000 | |
| 163 | 203 | 44.0460 | 4.9000 | CAF2 |
| 163 | 205 | -16.5100 | .3600 | |
| 165 | 207 | -15.6420 | 2.0000 | QUARZGLAS |
| 165 | 209 | 14.7420 | .1700 | |
| 167 | 211 | 15.1020 | 5.5000 | CAF2 |
| 167 | 213 | -29.4540 | .2000 | |
| 169 | 215 | 19.5190 | 5.0000 | CAF2 |
| 169 | 217 | -19.5190 | .0800 | |
| 171 | 219 | -19.5200 | 2.0000 | QUARZGLAS |
| 171 | 221 | 8.8780 | .5000 | |
| 173 | 223 | 9.6970 | 5.8000 | CAF2 |
| 173 | 225 | -13.2430 | .0700 | |
| 175 | 227 | -15.5050 | 2.0000 | QUARZGLAS |
| 175 | 229 | Planfläche | 2.4010 | |
| 177 | 231 | -11.5420 | 1.8500 | QUARZGLAS |
| 177 | 233 | 48.0020 | .2000 | |
| 179 | 235 | 9.8410 | 3.2000 | CAF2 |
| 179 | 237 | Planfläche | 10.7500 | |
| 181 | 239 | -10.1470 | 1.6000 | QUARZGLAS |
| 181 | 241 | -5.3040 | .2300 | |
| 183 | 243 | -4.8080 | 1.1000 | CAF2 |
| 183 | 245 | 4.8080 | .0700 | |
| 185 | 247 | 4.6630 | 1.4500 | QUARZGLAS |
| 185 | 249 | 7.1840 | Unendl. | |

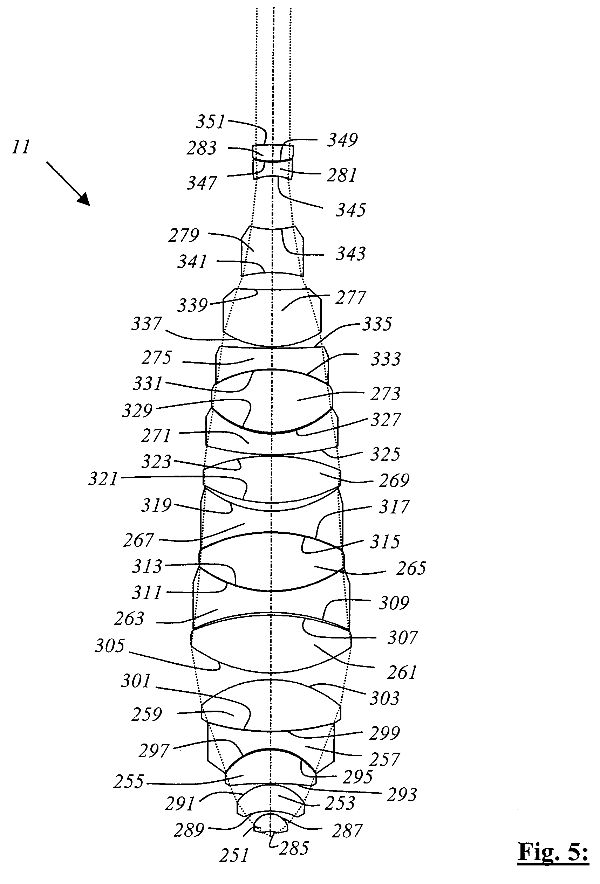

Fig. 5 zeigt den inneren Aufbau einer weiteren Ausführungsform des Objektivs 11, das 17 Linsen, die mit den Bezugszeichen 251 bis 283 markiert sind, beinhaltet. Das Objektiv 11 hat in Verbindung mit der in Figur 9 gezeigten Tubusoptik von 200 mm Brennweite eine einhundertfünfzigfache Vergrößerung und eine Numerische Apertur von 0,90. Die Linsen 251 bis 283 weisen je zwei Grenzflächen 285 ― 351 auf und sind jeweils aus Quarzglas oder aus Kalziumfluorid hergestellt.

Zwischen den Linsen 251 bis 283 befinden sich Luftspalte. Das Objektiv hat bei kollimiertem Strahleintritt für Licht von 248 nm und 903 nm Wellenlänge dieselbe Schnittweite von 0,364 mm. Der Arbeitsabstand beträgt 0,2 mm. Die Krümmungsradien der Grenzflächen 285 ― 351 der Linsen 251 bis 283, sowie die Glassorte der einzelnen Linsen und deren Abstand zueinander sind der folgenden Tabelle entnehmbar:

| Linse | Grenzfläche | Radius | Abstand | Glasname |
|---|---|---|---|---|
| 251 | 285 | -1.3020 | 1.2200 | QUARZGLAS |
| 251 | 287 | -1.3020 | .2000 | |
| 253 | 289 | -4.4850 | 1.8800 | CAF2 |
| 253 | 291 | -2.8770 | .1000 | |
| 255 | 293 | -25.3180 | 2.4000 | CAF2 |
| 255 | 295 | -3.9040 | .0800 | |
| 257 | 297 | -3.8810 | 1.2000 | QUARZGLAS |
| 257 | 299 | 16.8000 | .0310 | |
| 259 | 301 | 16.8010 | 3.7000 | CAF2 |
| 259 | 303 | -7.4810 | .5000 | |
| 261 | 305 | 9.4200 | 4.1500 | CAF2 |
| 261 | 307 | -14.1090 | .2000 | |
| 263 | 309 | -12.9970 | 1.5000 | QUARZGLAS |
| 263 | 311 | 8.4710 | .0380 | |
| 265 | 313 | 8.4720 | 4.1800 | CAF2 |
| 265 | 315 | -10.8320 | .0350 | |
| 267 | 317 | -10.8320 | 1.5000 | QUARZGLAS |
| 267 | 319 | 7.5030 | .6000 | |
| 269 | 321 | 10.0000 | 3.3500 | CAF2 |
| 269 | 323 | -12.2530 | .1000 | |
| 271 | 325 | 18.1250 | 1.5000 | QUARZGLAS |
| 271 | 327 | 5.8690 | .1000 | |
| 273 | 329 | 5.9510 | 4.5300 | CAF2 |
| 273 | 331 | -8.0360 | .0360 | |
| 275 | 333 | -8.0360 | 1.5000 | QUARZGLAS |
| 275 | 335 | 50.6020 | .1000 | |
| 277 | 337 | 6.3030 | 4.1000 | CAF2 |
| 277 | 339 | 48.0020 | 1.2100 | |
| 279 | 341 | -8.1590 | 3.1000 | QUARZGLAS |
| 279 | 343 | 5.4540 | 3.8000 | |
| 281 | 345 | -3.3030 | 1.0000 | CAF2 |
| 281 | 347 | 5.1430 | .0500 | |
| 283 | 349 | 4.6190 | 1.2000 | QUARZGLAS |
| 283 | 351 | -17.7680 | unendl. | |

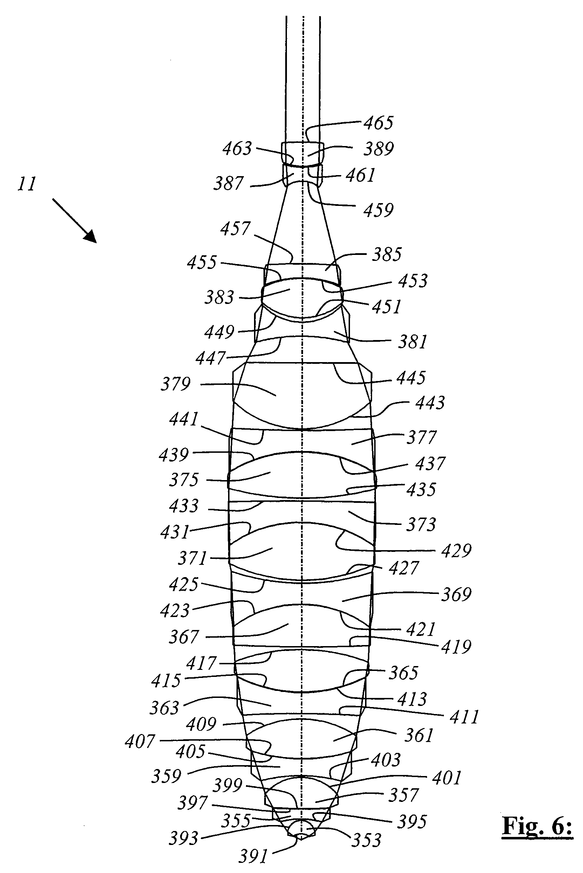

Fig. 6 zeigt den inneren Aufbau einer weiteren Ausführungsform des Objektivs 11, das 19 Linsen, die mit den Bezugszeichen 353 bis 389 markiert sind, beinhaltet. Das Objektiv 11 hat in Verbindung mit der in Figur 9 gezeigten Tubusoptik von 200 mm Brennweite eine einhundertfünfzigfache Vergrößerung und eine Apertur von 0,90. Die Linsen 353 bis 389 weisen je zwei Grenzflächen 391 ― 465 auf und sind jeweils aus Quarzglas oder aus Kalziumfluorid hergestellt. Zwischen den Linsen 353 bis 389 befinden sich Luftspalte. Das Objektiv hat bei kollimiertem Strahleintritt für Licht von 248 nm und 903 nm Wellenlänge dieselbe Schnittweite von 0,42 mm. Der Arbeitsabstand beträgt 0.2 mm. Die Krümmungsradien der Grenzflächen 391 ― 465 der Linsen 353 bis 389, sowie die Glassorte der einzelnen Linsen und deren Abstand zueinander sind der folgenden Tabelle entnehmbar:

| Linse | Grenzfläche | Radius | Abstand | Glasname |
|---|---|---|---|---|
| 353 | 391 | -1.0070 | .9600 | QUARZGLAS |
| | 393 | -.9500 | .1000 | |
| 355 | 395 | -5.4908 | .7000 | QUARZGLAS |
| | 397 | 27.0607 | .0200 | |
| 357 | 399 | 27.0607 | 2.2000 | CAF2 |
| | 401 | -3.2531 | .1000 | |
| 359 | 403 | -10.7848 | 1.2000 | QUARZGLAS |
| | 405 | 12.1721 | .0200 | |
| 361 | 407 | 12.1721 | 2.8000 | CAF2 |
| | 409 | -6.8280 | .4000 | |
| 363 | 411 | -64.0972 | 1.5000 | QUARZGLAS |
| | 413 | 9.8461 | .0200 | |
| 365 | 415 | 9.8461 | 3.0000 | CAF2 |
| | 417 | -12.9844 | .2000 | |
| 367 | 419 | 101.2944 | 3.0000 | CAF2 |
| | 421 | -7.8870 | .0200 | |
| 369 | 423 | -7.8870 | 1.5000 | QUARZGLAS |
| | 425 | 15.6216 | .2000 | |
| 371 | 427 | 11.8848 | 4.1000 | CAF2 |
| | 429 | -8.5251 | .0200 | |
| 373 | 431 | -8.5251 | 1.5000 | QUARZGLAS |
| | 433 | -140.7178 | .2000 | |
| 375 | 435 | 20.3658 | 3.3000 | CAF2 |
| | 437 | -9.4168 | .0200 | |
| 377 | 439 | -9.4168 | 1.5000 | QUARZGLAS |
| | 441 | 93.5331 | .1000 | |
| 379 | 443 | 6.9040 | 4.7000 | CAF2 |
| | 445 | 897.4094 | 1.9000 | |
| 381 | 447 | -11.6312 | 1.0000 | QUARZGLAS |
| | 449 | 3.7870 | .3000 | |
| 383 | 451 | 4.1771 | 2.8000 | CAF2 |
| | 453 | -6.0687 | .0500 | |
| 385 | 455 | -6.9364 | 1.0000 | QUARZGLAS |
| | 457 | -35.5321 | 5.8000 | |
| 387 | 459 | -1.7885 | 1.0000 | CAF2 |
| | 461 | 5.0394 | .0500 | |
| 389 | 463 | 3.5153 | 1.7000 | QUARZGLAS |
| | 465 | -17.9020 | unendlich | |

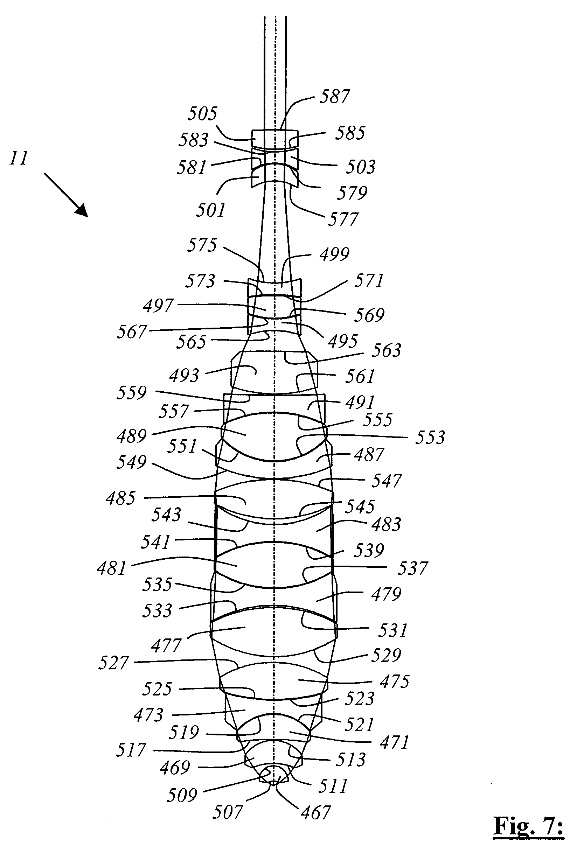

Fig. 7 zeigt den inneren Aufbau einer weiteren Ausführungsform des Objektivs 11, das 20 Linsen, die mit den Bezugszeichen 467 bis 505 markiert sind, beinhaltet. Das Objektiv 11 hat in Verbindung mit der in Figur 9 gezeigten Tubusoptik von 200 mm Brennweite eine zweihundertfache Vergrößerung und eine Apertur von 0,90. Die Linsen 467 bis 505 weisen je zwei Grenzflächen 507 ― 587 auf und sind jeweils aus Quarzglas oder aus Kalziumfluorid hergestellt. Zwischen den Linsen 467 bis 505 befinden sich Luftspalte. Das Objektiv hat bei kollimiertem Strahleintritt für Licht von 248 nm und 903 nm Wellenlänge dieselbe Schnittweite von 0,384 mm. Der Arbeitsabstand beträgt 0.2 mm. Die Krümmungsradien der Grenzflächen 507 ― 587 der Linsen 467 bis 505, sowie die Glassorte der einzelnen Linsen und deren Abstand zueinander sind der folgenden Tabelle entnehmbar:

| Linse | Grenzfläche | Radius | Abstand | Glasname |
|---|---|---|---|---|
| 467 | 507 | -1.3406 | 1.3417 | QUARZGLAS |
| | 509 | -1.2832 | .2000 | |
| 469 | 511 | -4.6344 | 2.0000 | CAF2 |
| | 513 | -3.0395 | .1000 | |
| 471 | 517 | -19.1192 | 2.2000 | CAF2 |
| | 519 | -4.1705 | .0500 | |
| 473 | 521 | -4.2122 | 1.2000 | QUARZGLAS |
| | 523 | 15.2410 | .0500 | |
| 475 | 525 | 15.2410 | 3.3201 | CAF2 |
| | 527 | -8.9154 | .5000 | |
| 477 | 529 | 9.9453 | 4.3403 | CAF2 |
| | 531 | -11.5633 | .1570 | |
| 479 | 533 | -10.9741 | 1.5000 | QUARZGLAS |
| | 535 | 9.4708 | .0500 | |
| 481 | 537 | 9.4708 | 4.0274 | CAF2 |
| | 539 | -10.1508 | .0500 | |
| 483 | 541 | -10.1508 | 1.5000 | QUARZGLAS |
| | 543 | 8.4705 | .5016 | |
| 485 | 545 | 10.8133 | 3.4593 | CAF2 |
| | 547 | -12.9233 | .1000 | |
| 487 | 549 | 11.9103 | 1.5000 | QUARZGLAS |
| | 551 | 6.1198 | .0500 | |
| 489 | 553 | 6.1198 | 4.2788 | CAF2 |
| | 555 | -9.7847 | .0500 | |
| 491 | 557 | -9.7847 | 1.5000 | QUARZGLAS |
| | 559 | 92.3864 | .1000 | |
| 493 | 561 | 11.5539 | 3.8000 | CAF2 |
| | 563 | -62.2415 | 1.8263 | |
| 495 | 565 | -6.2817 | 1.0000 | QUARZGLAS |
| | 567 | 7.3680 | .0500 | |
| 497 | 569 | 6.8762 | 2.0000 | CAF2 |
| | 571 | -14.6005 | .1151 | |
| 499 | 573 | -12.1375 | 1.0000 | QUARZGLAS |
| | 575 | 6.8053 | 9.0000 | |
| 501 | 577 | -3.6630 | 1.5000 | QUARZGLAS |
| | 579 | -3.0606 | .0500 | |
| 503 | 581 | -3.7004 | 1.0000 | CAF2 |
| | 583 | 6.1983 | .1993 | |
| 505 | 585 | 7.5116 | 1.7000 | QUARZGLAS |
| | 587 | -33.0000 | unendlich | |

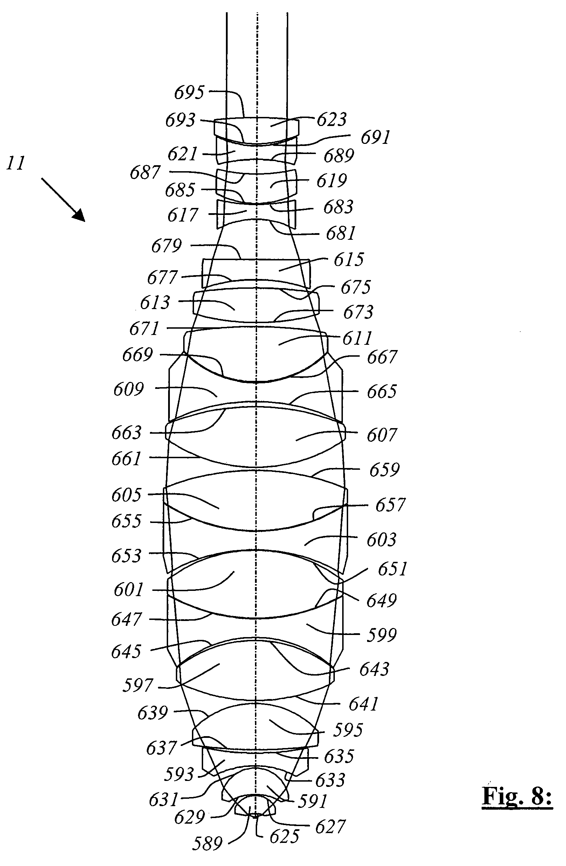

Fig. 8 zeigt den inneren Aufbau einer weiteren Ausführungsform des Objektivs 11, das 20 Linsen, die mit den Bezugszeichen 589 bis 623 markiert sind, beinhaltet. Das Objektiv 11 hat in Verbindung mit der in Figur 9 gezeigten Tubusoptik von 200 mm Brennweite eine dreiundsechzigfache Vergrößerung und eine Apertur von 0,90. Die Linsen 589 bis 623 weisen je zwei Grenzflächen 625 ― 695 auf und sind jeweils aus Quarzglas oder aus Kalziumfluorid hergestellt. Zwischen den Linsen 589 bis 623 befinden sich Luftspalte. Das Objektiv hat bei kollimiertem Strahleintritt für Licht von 248 nm und 903 nm Wellenlänge dieselbe Schnittweite von 0,417 mm. Der Arbeitsabstand beträgt 0.2 mm. Die Krümmungsradien der Grenzflächen 625 ― 695 der Linsen 589 bis 623, sowie die Glassorte der einzelnen Linsen und deren Abstand zueinander sind der folgenden Tabelle entnehmbar:

| Linse | Grenzfläche | Radius | Abstand | Glasname |
|---|---|---|---|---|
| 589 | 625 | -2.1244 | 1.7200 | QUARZGLAS |
| | 627 | -2.1486 | .1000 | |
| 591 | 629 | -4.6685 | 2.5000 | CAF2 |
| | 631 | -3.2430 | .2000 | |
| 593 | 633 | -8.3322 | 1.2000 | QUARZGLAS |
| | 635 | 25.1850 | .3268 | |
| 595 | 637 | 43.3114 | 4.4000 | CAF2 |
| | 639 | -8.1452 | .3000 | |
| 597 | 641 | 16.8037 | 5.7000 | CAF2 |
| | 643 | -11.6783 | .2968 | |
| 599 | 645 | -11.0103 | 1.8000 | QUARZGLAS |
| | 647 | 16.4439 | .0500 | |
| 601 | 649 | 16.4439 | 6.5000 | CAF2 |
| | 651 | -13.6015 | .0500 | |
| 603 | 653 | -16.2615 | 1.8000 | QUARZGLAS |
| | 655 | 15.3763 | .0500 | |
| 605 | 657 | 15.3763 | 5.7500 | CAF2 |
| | 659 | -22.5022 | .3000 | |
| 607 | 661 | 14.5691 | 5.8000 | CAF2 |
| | 663 | -21.6045 | .4808 | |
| 609 | 665 | -17.9557 | 1.8000 | QUARZGLAS |
| | 667 | 9.2065 | .1088 | |
| 611 | 669 | 9.3059 | 5.3000 | CAF2 |
| | 671 | -38.5138 | .4000 | |
| 613 | 673 | 21.6588 | 3.3000 | CAF2 |
| | 675 | -37.7818 | .8000 | |
| 615 | 677 | -15.4376 | 1.9000 | QUARZGLAS |
| | 679 | 356.4300 | 3.8480 | |
| 617 | 681 | -7.5117 | 1.4000 | QUARZGLAS |
| | 683 | 15.5540 | .1000 | |
| 619 | 685 | 8.1444 | 2.8000 | CAF2 |
| | 687 | 16.3383 | 1.4000 | |
| 621 | 689 | -13.4675 | 1.3000 | CAF2 |
| | 691 | 8.6117 | .1736 | |
| 623 | 693 | 9.6434 | 2.5000 | QUARZGLAS |
| | 695 | -33.000 | Unendl. | |

Fig. 9 zeigt den inneren Aufbau der Tubusoptik 21, die drei Linsen, die mit den Bezugszeichen 697 bis 699 markiert sind, beinhaltet. Tubusoptik 21 hat bei 248 nm eine Brennweite von 200 mm. Die Linsen 697 bis 699 weisen je zwei Grenzflächen 703 ― 713 auf und sind jeweils aus Quarzglas oder aus Kalziumfluorid hergestellt. Zwischen den Linsen 697 bis 699 befinden sich Luftspalte. Die Tubusoptik 21 beinhaltet keinen Kitt und ist derart ausgestaltet, dass durch das Zusammenwirken der Tubusoptik 21 und des Objektivs 11 der Farblängsfehler des Objektivs 11 im Bereich von 10 nm oberhalb und unterhalb der ersten Wellenlänge kompensiert ist. Darüber hinaus ist die Tubusoptik 21 derart ausgebildet, dass durch das Zusammenwirken der Tubusoptik 21 und des Objektivs 11 der Farbquerfehler der Tubusoptik 21 im Bereich von weniger als 10 nm oberhalb und unterhalb der ersten Wellenlänge kompensiert ist. Die Krümmungsradien der Grenzflächen 703 ― 713 der Linsen 697 bis 699 sowie die Glassorte der einzelnen Linsen und deren Abstand zueinander sind der folgenden Tabelle entnehmbar:

| Linse | Grenzfläche | Radius | Abstand | Glasname |
|---|---|---|---|---|
| 697 | 703 | 174.9820 | 3.0000 | Quarzglas |
| | 705 | -60.4200 | 12.1575 | |
| 699 | 707 | -44.6500 | 2.5000 | CaF2 |
| | 709 | 76.1030 | .1000 | |
| 701 | 711 | 76.1030 | 3.0000 | Quarzglas |
| | 713 | -191.4220 | 169.6484 | |

### Bezugszeichenliste:

- 1: Inspektionsmikroskop
- 3: Lichtquelle
- 5: Quecksilberlampe
- 7: Beleuchtungslichtstrahl
- 9: teildurchlässiger Spiegel
- 11: Objektiv
- 13: Objekt
- 15: x-y-Feinpositioniertisch
- 17: Elektromotor
- 19: Detektionslicht
- 21: Tubusoptik
- 23: TV-Kamera
- 25: Autofokuseinrichtung
- 27: Autofokuslichtstrahl
- 28: dichroitischer Strahlteiler
- 29 bis 69: Linse
- 71 bis 153: Grenzflächen
- 155 bis 185: Linse
- 187 bis 249: Grenzflächen
- 251 bis 283: Linse
- 285 bis 351: Grenzflächen
- 353 bis 389: Linse
- 391 bis 465: Grenzflächen
- 467 bis 505: Linse
- 507 bis 587: Grenzflächen
- 589 bis 623: Linse
- 625 bis 695: Grenzflächen
- 697 bis 701: Linse
- 703 bis 713: Grenzflächen

## Patentansprüche

1. Inspektionsmikroskop (1) mit einer Lichtquelle (3), die Licht einer ersten Wellenlänge unterhalb von 400 nm zur Beleuchtung eines zu inspizierenden Objekts (13) emittiert, einem Objektiv (11), das aus mehreren optischen Komponenten zusammengesetzt ist und eine Numerische Apertur sowie eine Brennweite aufweist, einer Tubusoptik (21) und einer Autofokuseinrichtung (25), die Licht einer zweiten Wellenlänge auf das Objekt (13) richtet, **dadurch gekennzeichnet, dass** die zweite Wellenlänge größer als 400 nm ist und das Objektiv (11) eine optische Korrektur aufweist, die den Farblängsfehler in Bezug auf die erste und die zweite Wellenlänge eliminiert und die optischen Komponenten kittfrei zusammengefügt sind.

2. Inspektionsmikroskop (1) nach Anspruch 1, **dadurch gekennzeichnet, dass** zwischen mindestens zwei optischen Komponenten ein Luftspalt ist.

3. Inspektionsmikroskop (1) nach Anspruch 1, **dadurch gekennzeichnet, dass** Aberrationen durch das Zusammenwirken von Objektiv (11) und Tubusoptik (21) korrigiert sind.

4. Inspektionsmikroskop (1) nach Anspruch 1, **dadurch gekennzeichnet, dass** die Tubusoptik (21) kittfrei zusammengefügte Linsen (697 bis 701) beinhaltet.

5. Inspektionsmikroskop (1) nach Anspruch 1, **dadurch gekennzeichnet, dass** die erste Wellenlänge im Bereich von 243 nm bis 266 nm liegt.

6. Inspektionsmikroskop (1) nach Anspruch 1, **dadurch gekennzeichnet, dass** die zweite Wellenlänge größer als 800 nm ist.

7. Objektiv (11), das Licht einer ersten Wellenlänge unterhalb von 400 nm und Licht einer zweiten Wellenlänge oberhalb von 400 nm transmittiert und aus mehreren Linsen zusammengesetzt ist und eine Numerische Apertur sowie eine Vergrößerung aufweist, **dadurch gekennzeichnet, dass** das Objektiv (11) eine optische Korrektur aufweist, die den Farblängsfehler in Bezug auf die erste und die zweite Wellenlänge eliminiert und die Linsen kittfrei zusammengefügt sind.

8. Objektiv (11) nach Anspruch 7, **dadurch gekennzeichnet, dass** mindestens eine Linse (29 bis 69, 155 bis185, 251 bis 283, 353 bis 389, 467 bis 505, 589 bis 623) des Objektivs (11) aus Kalziumfluorid oder aus Quarzglas oder aus Bariumfluorid oder aus Lithiumfluorid oder Strontiumfluorid gefertigt ist.

9. Objektiv (11) nach Anspruch 7, **dadurch gekennzeichnet, dass** die erste Wellenlänge im Bereich von 243 nm bis 266 nm liegt.

10. Objektiv (11) nach Anspruch 7, **dadurch gekennzeichnet, dass** die zweite Wellenlänge größer als 800 nm ist.
